# EUROPÄISCHE PATENTANMELDUNG

(11) **EP 2 196 829 A2**
(43) Veröffentlichungstag der Anmeldung: **16.06.2010**
(21) Anmeldenummer: 09178138.5
(22) Anmeldetag: 07.12.2009
(51) Int. Cl.: G01V 3/15

(54) **Ortungsgerät**

(30) Priorität: 10.12.2008 DE 102008054456
(71) Anmelder: Robert Bosch GmbH, 70442 Stuttgart (DE)
(72) Erfinder: Krapf, Reiner, 72770 Reutlingen (DE); Braun, Heiko, 70771 Leinfelden-Echterdingen (DE)

(57) **Zusammenfassung**

Die Erfindung geht aus von einem Ortungsgerät, insbesondere einem handgeführten Ortungsgerät, mit einem Gehäuse (12; 12a) und einer Ortungseinheit (14; 14a), die zu einer Erfassung einer Materialkenngröße eines Untersuchungsobjekts (16; 16a) mittels eines Messsignals (20, 20a; 22, 22a) vorgesehen ist und die eine Antenneneinheit (24; 24a) aufweist mit zumindest einem Antennenelement (26, 26a; 28, 28a), das eine Polarisationsrichtung (30, 30a; 32, 32a) aufweist und zu einem Aussenden und/oder Empfangen des Messsignals (20, 20a; 22, 22a) entlang der Polarisationsrichtung (30, 30a; 32, 32a) vorgesehen ist.

Es wird vorgeschlagen, dass, die Ortungseinheit (14; 14a) eine Einstelleinheit (34; 34a) aufweist, die zu einer Variation der Polarisationsrichtung (30, 30a; 32, 32a) vorgesehen ist.

## Beschreibung

### Stand der Technik

Die Erfindung geht aus von einem Ortungsgerät nach dem Oberbegriff des Anspruchs 1.

Es ist bereits ein Ortungsgerät bekannt mit einem Gehäuse und einer Ortungseinheit, die zu einer Erfassung einer Materialkenngröße eines Untersuchungsobjekts mittels eines Messsignals vorgesehen ist und die eine Antenneneinheit mit zumindest einem Antennenelement aufweist. Das Antennenelement weist eine Polarisationsrichtung auf und ist dabei zu einem Aussenden und/oder Empfangen des Messsignals entlang der Polarisationsrichtung vorgesehen.

### Offenbarung der Erfindung

Die Erfindung geht aus von einem Ortungsgerät, insbesondere einem handgeführten Ortungsgerät, mit einem Gehäuse und einer Ortungseinheit, die zu einer Erfassung einer Materialkenngröße eines Untersuchungsobjekts mittels eines Messsignals vorgesehen ist und die eine Antenneneinheit aufweist mit zumindest einem Antennenelement, das eine Polarisationsrichtung aufweist und zu einem Aussenden und/oder Empfangen des Messsignals entlang der Polarisationsrichtung vorgesehen ist.

Es wird vorgeschlagen, dass die Ortungseinheit eine Einstelleinheit aufweist, die zu einer Variation der Polarisationsrichtung vorgesehen ist. In diesem Zusammenhang soll unter "vorgesehen" insbesondere speziell ausgestattet und/oder speziell ausgelegt und/oder speziell programmiert verstanden werden. Des Weiteren soll unter einer "Polarisationsrichtung" insbesondere eine Richtung des Antennenelements verstanden werden, entlang derer ein polarisiertes Signal und/oder eine polarisierte Strahlung von dem Antennenelement ausgesendet und/oder empfangen werden kann. Vorzugsweise kann mittels des empfangenen Messsignals eine dielektrische Kenngröße in dem Untersuchungsobjekt und/oder eines Gegenstands bestimmt und/oder erfasst werden, so dass anhand der dielektrischen Kenngröße vorteilhaft eine Unterscheidung zwischen unterschiedlichen Bereichen in dem Untersuchungsobjekt mit unterschiedlichen Materialeigenschaften und/oder unterschiedlichen Materialien erreicht werden kann. Insbesondere kann hierbei vorteilhaft ein in dem Untersuchungsobjekt angeordneter Gegenstand erfasst werden und/oder es kann ein Feuchtegehalt in dem Untersuchungsobjekt aufgrund differierender Materialeigenschaften entlang eines Verfahrens des Ortungsgeräts erfasst werden. Das Untersuchungsobjekt ist vorzugsweise von einer Wand, einem Boden, einer Decke und/oder weiteren Untersuchungsobjekten gebildet. Die Einstelleinheit kann von einer rein mechanischen Einheit, wie beispielsweise eine mechanische Übertragungseinheit zur Übertragung einer Bewegung und/oder Kraft, einer optischen Einheit, wie beispielsweise eine ein optisches Filter umfassende optische Einheit, und/oder von einer elektromechanischen Einheit zur Einstellung der Polarisationsrichtung gebildet sein. Es kann durch die erfindungsgemäße Ausgestaltung vorteilhaft eine Polarisationsrichtung des Antennenelements gegenüber einer Ausrichtung eines Bereichs des Untersuchungsobjekts mit einer zum Untersuchungsobjekt differierenden Materialeigenschaft, insbesondere des in dem Untersuchungsobjekt angeordneten Gegenstands, verändert werden und damit die Ausrichtung, insbesondere einer Längsachse, und/oder ein Verlauf des Bereichs und/oder des Gegenstands in dem Untersuchungsobjekt vorteilhaft erfasst werden, wobei eine Ausrichtung des Bereichs und/oder des Gegenstands insbesondere anhand eines maximalen Messsignals während der Variation der Polarisationsrichtung erfasst werden kann. Besonders vorteilhaft kann hierbei die Ausrichtung des Bereichs und/oder des Gegenstands unter Beibehaltung einer Messposition des Ortungsgeräts erfasst werden und damit ein hoher Bedienkomfort für einen Bediener des Ortungsgeräts erzielt werden.

Weist die die Antenneneinheit zumindest ein zweites Antennenelement mit einer zweiten Polarisationsrichtung auf, wobei die Einstelleinheit zu einer Variation der zweiten Polarisationsrichtung vorgesehen ist, kann vorteilhaft mittels der beiden Polarisationsrichtungen eine Ausrichtung des Gegenstands besonders schnell erfasst werden und zudem eine Vorteilhafte Unterdrückung von Untergrundsignalen, wie beispielsweise von aus Imhomogenitäten einer zu untersuchenden Wand resultierenden Untergrundsignalen, vorteilhaft erzielt werden. Vorzugsweise ist hierbei eines der beiden Antennenelemente zu einem Aussenden des Messsignals vorgesehen und das weitere der beiden Antennenelemente zu einem Empfangen des Messsignals vorgesehen, so dass eine vorteilhafte Entkopplung des Empfangssignals von dem ausgesendeten Messsignals erreicht werden kann. In einer weiteren Ausgestaltung der Erfindung kann die Ortungseinheit mehr als zwei Antennenelemente und/oder Polarisationsrichtungen aufweisen.

Besonders vorteilhaft ist die Einstelleinheit zu einer Variation der beiden Polarisationsrichtungen vorgesehen, wodurch besonders schnell eine Ausrichtung der beiden Polarisationsrichtungen erreicht werden kann. Vorzugsweise ist die Einstelleinheit hierbei zu einer zeitgleichen Variation der beiden Polarisationsrichtungen der beiden Antennenelemente vorgesehen.

Ferner wird vorgeschlagen, dass die beiden Polarisationsrichtungen einen fixen Winkel zueinander einschließen. In diesem Zusammenhang soll unter einem "fixen Winkel" insbesondere verstanden werden, dass die beiden Polarisationsrichtungen bei einer Variation der Polarisationswinkel ihre Positionen zueinander beibehalten und die beiden Antennenelemente starr miteinander verbunden sind. Es kann somit eine vorteilhafte Variation der beiden Polarisationswinkel unter Beibehaltung einer Ausrichtung der beiden Polarisationsrichtungen und/oder Antennenelemente zueinander erreicht werden. Alternativ hierzu ist es zudem denkbar, dass die Polarisationsrichtungen der beiden Antennenelemente zueinander variiert werden können.

Es wird ferner vorgeschlagen, dass die zumindest zwei Polarisationsrichtungen der zwei Antennenelemente im Wesentlichen orthogonal zueinander angeordnet sind. Hierbei soll unter "im Wesentlichen orthogonal" insbesondere verstanden werden, dass die beiden Antennenelemente und/oder die beiden Polarisationsrichtungen einen Winkel von 90° zueinander einschließen mit einer maximalen Abweichung von 30°, vorteilhafterweise von maximal 15° und besonders bevorzugt von maximal 5°. Diese Ausgestaltung der Erfindung ermöglicht es, das Empfangssignal insbesondere unabhängig von dem ausgesendeten Messsignal zu empfangen. Besonders vorteilhaft sind die beiden Polarisationsrichtung im Wesentlichen 45° zu dem Gegenstand ausgerichtet, so dass durch eine Reflexion des von dem ersten Antennenelement ausgesandten Messsignals dessen Polarisationsrichtung gedreht wird, insbesondere um 90° gedreht wird, und von dem zweiten Antennenelement empfangen werden kann. Dabei kann eine maximale Signalstärke des empfangenen und von dem Gegenstand reflektierten Signals erzielt werden und es kann zudem eine vorteilhafte Rauschunterdrückung bzw. Unterdrückung von Untergrundsignalen, insbesondere von Inhomogenitäten und/oder Wandstrukturen, die eine beliebige Ausrichtung zu den beiden Polarisationsrichtungen aufweisen, erreicht werden.

Des Weiteren wird vorgeschlagen, dass das Antennenelement im Gehäuse um eine Drehachse drehbar gelagert ist, wodurch eine Änderung und/oder Variation der Polarisationsrichtung des Antennenelements konstruktiv einfach erreicht werden kann. Vorzugsweise ist das Antennenelement bezüglich einer Längsachse des Gehäuses drehbar gelagert, wobei unter einer "Längsachse" insbesondere eine Achse des Gehäuses verstanden werden soll, die entlang einer Länge und/oder einer Längserstreckung des Gehäuses durch dieses verläuft.

In einer weiteren Ausgestaltung der Erfindung wird vorgeschlagen, dass die Einstelleinheit zumindest ein Bedienelement aufweist, das zu einer manuellen Einstellung der Polarisationsrichtung des Antennenelements durch einen Bediener vorgesehen ist. Vorzugsweise ist das Bedienelement von einem Drehregler und/oder einer Einstelltaste und/oder einer Tastatur und/oder weiterer, dem Fachmann als sinnvoll erscheinender Bedienelemente gebildet. Eine Anzahl der Bedienelemente kann insbesondere an eine Anzahl der Antennenelemente und/oder der einstellbaren und/oder veränderbaren Polarisationsrichtungen angepasst werden, so dass für jeweils ein Antennenelement mit einer einstellbaren und/oder veränderbaren Polarisationsrichtung insbesondere ein Bedienelement zur Verfügung steht. Es kann hierbei eine Einstellung und/oder eine Änderung der Polarisationsrichtung des Antennenelements besonders kostengünstig erreicht werden.

Weiterhin wird vorgeschlagen, dass die Einstelleinheit eine Anzeigeeinheit aufweist, die zu einer Ausgabe einer Stärke des empfangenen Messsignals während einer manuellen Einstellung der Polarisationsrichtung des Antennenelements vorgesehen ist. Die Anzeigeeinheit weist hierbei vorteilhafterweise ein Display und/oder zumindest eine LED und/oder weitere dem Fachmann als sinnvoll erscheinende, optische Anzeigemittel auf. Unter einer "Stärke eines Empfangssignals" soll hierbei insbesondere eine Signalhöhe des Empfangssignals verstanden werden. Es kann hierbei eine Polarisationsrichtung besonders einfach auf eine Ausrichtung des Gegenstands abgestimmt werden, indem die Polarisationsrichtung anhand einer maximalen Signalstärke eines von dem Antennenelement empfangenen Signals im Betrieb des Ortungsgeräts eingestellt werden kann und somit ein hoher Bedienkomfort für den Bediener des Ortungsgeräts während einer Variation der Polarisationsrichtung erreicht werden kann.

Es wird außerdem vorgeschlagen, dass das Ortungsgerät eine Recheneinheit aufweist, die zu einer automatischen Einstellung der Polarisationsrichtung des Antennenelements vorgesehen ist. In diesem Zusammenhang soll unter einer "Recheneinheit" insbesondere eine Einheit verstanden werden, die von einer Auswerteeinheit und/oder einer Signalverarbeitungseinheit gebildet sein kann, wobei die Recheneinheit sowohl von einem Prozessor allein als auch insbesondere von einem Prozessor und weiteren Elektronikbauteilen, wie beispielsweise einem Speichermittel, gebildet sein kann. Unter einer "automatischen Einstellung" soll insbesondere eine selbsttätige Einstellung der Polarisationsrichtung mittels der Recheneinheit verstanden werden. Es kann hierbei eine besonders hoher Bedienkomfort des Ortungsgeräts erreicht werden. Zudem kann mittels der Recheneinheit eine besonders schnelle Einstellung der Polarisationsrichtung des Antennenelements insbesondere bei einer variierenden Ausrichtung des Gegenstands und/oder bei einem Bewegen und/oder Verfahren des Ortungsgeräts erreicht werden, indem die Recheneinheit die Polarisationsrichtung dabei insbesondere stetig an eine Ausrichtung des Gegenstands anpasst.

Ferner wird vorgeschlagen, dass die Einstelleinheit eine Antriebseinheit aufweist, die zu einer Drehung des Antennenelements um eine Drehachse vorgesehen ist. Vorzugsweise weist die Antriebseinheit einen Elektromotor und/oder ein mechanisches Übertragungselement zur Übertragung einer Bewegung und/oder Kraft auf, die zu einer elektromechanischen Drehung des Antennenelements im Betrieb des Ortungsgeräts vorgesehen sind. Es kann durch diese Ausgestaltung der Erfindung eine besonders exakte Einstellung einer Ausrichtung und/oder der Polarisationsrichtung des Antennenelements und damit einhergehend eine besonders effektive Erfassung von Gegenständen und/oder eines Untergrunds des Untersuchungsobjekts erreicht werden. Besonders vorteilhaft ist die Recheneinheit hierbei zu einer automatischen Aktivierung der Antriebseinheit vorgesehen. Grundsätzlich ist es ferner denkbar, dass die Antriebseinheit manuell von einem Bediener aktiviert werden kann, wie beispielsweise mittels eines Bedienelements zur Einstellung der Polarisationsrichtung.

In einer vorteilhaften Weiterbildung der Erfindung wird vorgeschlagen, dass die Einstelleinheit eine Recheneinheit aufweist, die mittels einer Änderung der Polarisationsrichtung des Antennenelements zu einer Bestimmung eines Untergrundsignals vorgesehen ist. Es kann eine vorteilhafte Unterdrückung eines von einem Gegenstand reflektierten Signals erreicht werden und damit insbesondere eine Feuchtemessung des Untersuchungsobjekts erzielt werden. Zudem kann bei Untersuchungsobjekten mit einer inhomogenen Objektstruktur durch Variation der Polarisationsrichtung des Antennenelements ein maximales Untergrundsignal erfasst werden und mittels eines Untergrundabzugs ein insbesondere zumindest teilweise störungsfreies Gegenstandssignal erreicht werden.

Besonders vorteilhaft weist die Einstelleinheit eine Recheneinheit auf, die zu einer automatischen Aktualisierung einer Darstellung der Polarisationsrichtung des Antennenelements mittels einer Anzeigeeinheit vorgesehen ist. Hierdurch kann dem Bediener stets eine aktuelle Ausrichtung der Polarisationsrichtung des Antennenelements angezeigt werden und damit eine vorteilhafte Informationsübermittlung an den Bediener erreicht werden, insbesondere bei einem Bewegen und/oder Verfahren des Ortungsgeräts und/oder bei einer sich ändernden Ausrichtung des Gegenstands. Zudem kann mittels der Anzeigeeinheit eine aktuelle Ausrichtung eines erfassten Gegenstands für den Bediener dargestellt werden und bei einem Verfahren des Ortungsgeräts ein Verlauf des Gegenstands in dem Untersuchungsobjekt vorteilhaft mittels der Anzeigeeinheit dargestellt werden.

Des Weiteren geht die Erfindung aus von einem Ortungsverfahren, insbesondere mit einem Ortungsgerät, zu einer Erfassung einer Materialkenngröße eines Untersuchungsobjekts mittels eines Messsignals, wobei eine Polarisationsrichtung eines Antennenelements einer Antenneneinheit bezüglich einer Achse eines Gehäuses des Ortungsgeräts geändert wird. Es kann durch die erfindungsgemäße Ausgestaltung vorteilhaft eine Polarisationsrichtung des Antennenelements gegenüber einer Ausrichtung eines Bereichs des Untersuchungsobjekts mit einer zum Untersuchungsobjekt differierenden Materialeigenschaft, insbesondere des in dem Untersuchungsobjekt angeordneten Gegenstands, verändert werden und damit die Ausrichtung, insbesondere einer Längsachse, des Bereichs und/oder des Gegenstands in dem Untersuchungsobjekt vorteilhaft erfasst werden, wobei eine Ausrichtung des Bereichs und/oder des Gegenstands insbesondere anhand eines maximalen Messsignals während der Variation der Polarisationsrichtung erfasst werden kann. Besonders vorteilhaft kann hierbei die Ausrichtung des Bereichs und/oder des Gegenstands unter Beibehaltung einer Messposition des Ortungsgeräts erfasst werden und damit ein hoher Bedienkomfort für einen Bediener des Ortungsgeräts erzielt werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Ortungsgerät mit einer Ortungseinheit in einer schematischen Ansicht,
- Fig. 2: das Ortungsgerät zusammen mit einem Untersuchungsobjekt in einer Draufsicht,
- Fig. 3: die Ortungseinheit in einer schematischen Darstellung,
- Fig. 4: eine zu einer Ausrichtung eines Gegenstands parallele Polarisationsrichtung eines Antennenelement in einer schematischen Darstellung,
- Fig. 5: die zur Ausrichtung des Gegenstands orthogonale Polarisationsrichtung des Antennenelements in einer schematischen Darstellung,
- Fig. 6: eine alternative Ausgestaltung einer Ortungseinheit mit zwei Antennenelementen in einer schematischen Darstellung und
- Fig. 7: zwei zur Ausrichtung des Gegenstands um 45° gedrehte Polarisationsrichtungen zweier, orthogonal zueinander ausgerichteter Antennenelemente in einer schematischen Darstellung.

### Beschreibung der Ausführungsbeispiele

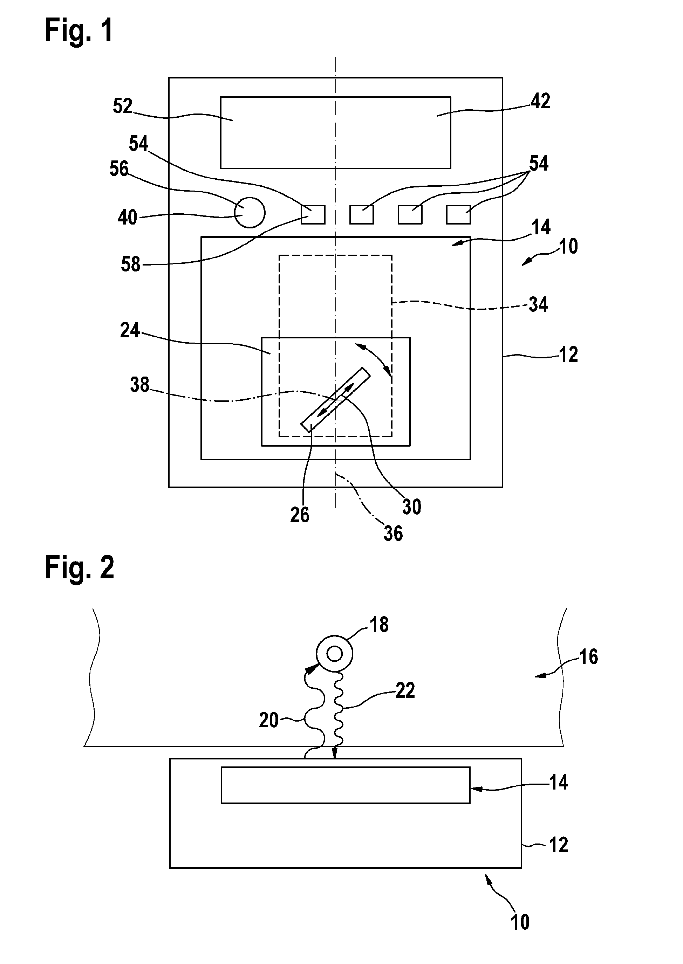

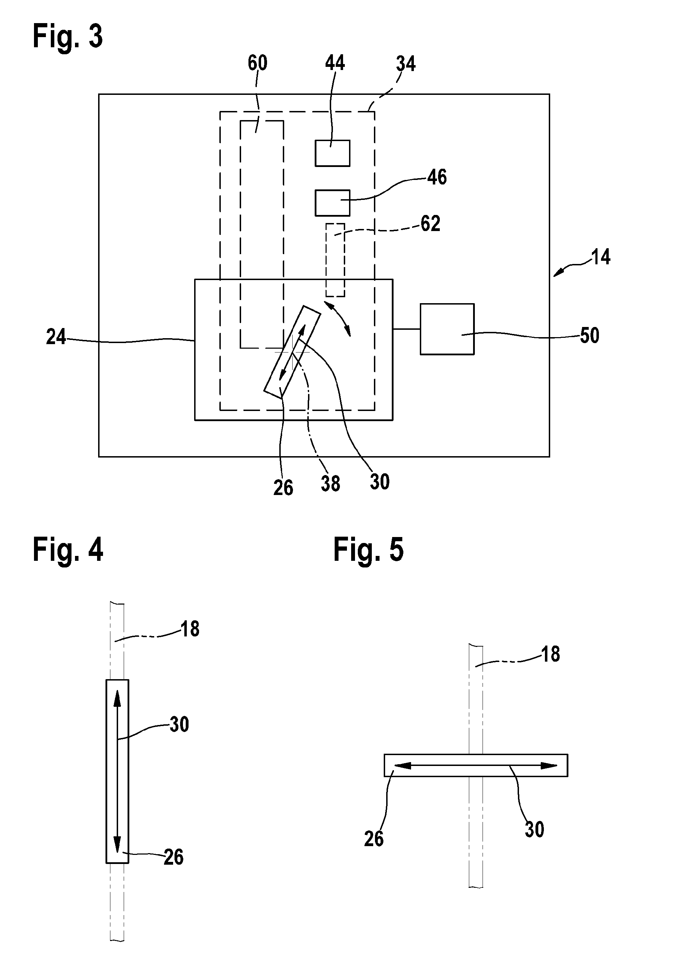

In den Figuren 1 und 2 ist ein handgeführtes Ortungsgerät 10 schematisch dargestellt. Das Ortungsgerät 10 weist eine Ortungseinheit 14 auf, die zu einer Erfassung einer Materialkenngröße eines Untersuchungsobjekts 16, wie beispielsweise einer Wand, mittels eines Messsignals 20, 22 vorgesehen ist zur Erfassung eines in dem Untersuchungsobjekt 16 angeordneten Gegenstands 18 und/oder zum Erfassen eines Feuchtegehalts in dem Untersuchungsobjekt 16. Mittels des Messsignals 20, 22 wird vorteilhaft eine dielektrische Kenngröße des Untersuchungsobjekts 16 erfasst, wobei die dielektrische Kenngröße eine Materialeigenschaft des Untersuchungsobjekts 16 und/oder des Gegenstands 18 beinhaltet. Zudem weist das Ortungsgerät 10 ein Gehäuse 12 auf, das die Ortungseinheit 14 umgibt. Die Ortungseinheit 14 weist eine Antenneneinheit 24 mit einem Antennenelement 26 auf, das zu einem Aussenden und einem Empfangen des Messsignals 20, 22 vorgesehen ist (Figuren 1 und 3). Des Weiteren weist die Ortungseinheit 14 eine Signalerzeugungseinheit 50 auf, die zu einem Generieren des von dem Antennenelement 26 auszusendenden Messsignals 20 vorgesehen ist. Das Ortungsgerät 10 umfasst ferner eine Anzeigeeinheit 42. Die Anzeigeeinheit 42 weist ein Display 52 auf und ist zu einer Datenausgabe und/oder einer Informationsübermittlung an einen Bediener des Ortungsgeräts 10 vorgesehen. In einer alternativen Ausgestaltung der Erfindung kann die Anzeigeeinheit 42 eine Leuchtdiode (LED) oder mehrere LEDs und/oder weitere, dem Fachmann als sinnvoll erscheinende optische Anzeigemittel aufweisen. Zudem umfasst das Ortungsgerät 10 mehrere Bedienelemente 40, 54, die von einem Drehregler 56 und von Eingabetasten 58 gebildet sind, mittels derer der Bediener eine benutzerdefinierte Eingabe im Betrieb des Ortungsgeräts 10 tätigen kann.

Das Antennenelement 26 der Antenneneinheit 24 weist eine Polarisationsrichtung 30 auf, entlang derer im Betrieb das Messsignal 20 ausgesendet wird und das von dem Gegenstand 18 reflektierte Messsignal 22 entlang der Polarisationsrichtung 30 empfangen wird. Die Polarisationsrichtung 30 des Antennenelements 26 ist innerhalb des Ortungsgeräts 10 veränderbar. Hierzu weist die Ortungseinheit 14 eine Einstelleinheit 34 auf, mittels der die Polarisationsrichtung 30 des Antennenelements 26 variiert werden kann. Das Antennenelement 26 ist in dem Gehäuse 12 drehbar gelagert, wobei die Einstelleinheit 34 eine nicht näher dargestellte Lagereinheit zu einer drehbaren Lagerung des Antennenelements 26 aufweist. Das Antennenelement ist hierbei um eine Drehachse 38 innerhalb der Ortungseinheit 14 drehbar gelagert, wobei die Drehachse im Wesentlichen senkrecht zur Polarisationsrichtung 30 und/oder einer Längserstreckung des Antennenelements 26 ausgerichtet ist. Während einer Drehbewegung des Antennenelements 26 ändert sich die Polarisationsrichtung 30 bezüglich einer von einer Längsachse gebildete Achse 36 des Gehäuses 12.

Die Polarisationsrichtung 30 des Antennenelements 26 kann sowohl manuell als auch automatisch eingestellt werden. Zur manuellen Einstellung der Polarisationsrichtung 30 weist die die Einstelleinheit 34 eine mechanische Einheit 60 auf. Bei der manuellen Einstellung wird von einem Bediener über das von dem Drehregler 56 gebildete Bedienelement 40 direkt die Polarisationsrichtung 30 des Antennenelements 26 eingestellt, wobei eine Drehbewegung des Drehreglers 56 mittels der mechanischen Einheit 60 auf das Antennenelement 26 übertragen wird. Mittels des Displays 52 wird hierbei eine Stärke des von dem Antennenelement 26 empfangenen Empfangssignals 22 für den Bediener angezeigt, wobei bei einer im Wesentlichen parallelen Ausrichtung der Polarisationsrichtung 30 des Antennenelements 26 zu einer Ausrichtung und/oder einer Längserstreckung des Gegenstands 18 (Figur 4) in dem Untersuchungsobjekt 16 das von dem Gegenstand 18 reflektierten Messsignal 22 eine maximale Stärke aufweist. In einem Messbetrieb kann somit nach einer automatischen Detektion des Gegenstands 18, wie beispielsweise ein Rohr oder eine Leitung oder ein Balken usw., in dem Untersuchungsobjekt 16, insbesondere einer Wand, eine von de Längserstreckung gebildete Ausrichtung des Gegenstands 18 in dem Untersuchungsobjekts 16 anhand der Signalstärke des empfangenen Messsignals 22 ermittelt werden. Die Signalstärke kann mittels einer Balkenskala und/oder einer Farbskala und/oder einem Graustufenverlauf usw. angezeigt werden. Alternativ ist zudem eine akustische Ausgabe über eine akustische Ausgabeeinheit des Ortungsgeräts 10 denkbar.

Eine Aktivierung der automatischen Einstellung der Polarisationsrichtung 30 des Antennenelements 26 erfolgt über eine der Eingabetasten 58 durch den Bediener des Ortungsgeräts 10. Für die automatische Einstellung des Antennenelements 26 weist die Einstelleinheit 34 eine Recheneinheit 44 und eine Antriebseinheit 46 auf (Figur 3). Die Antriebseinheit 46 weist einen Elektromotor auf, der mit einem mechanischen Übertragungselement 62 gekoppelt ist, das eine Drehbewegung auf das Antennenelement 26 überträgt. Die Recheneinheit 44 ist dabei zu einer automatischen Aktivierung der Antriebseinheit 46 vorgesehen. Die von dem Antennenelement 26 erfasste Signalstärke des empfangenen Messsignals 22 wird dabei von der Recheneinheit 44 für die automatischen Einstellung der Ausrichtung der Polarisationsrichtung 30 des Antennenelements 26 herangezogen, wobei eine maximale Signalstärke des empfangenen Messsignals 22 eine parallele Ausrichtung der Polarisationsrichtung 30 und der Ausrichtung des Gegenstands 18 in dem Untersuchungsobjekt 16 anzeigt (Figur 4).

Ferner ist die Recheneinheit 44 dazu vorgesehen, ein Untergrundsignal in einem Messbetrieb zu erfassen, wobei die Polarisationsrichtung 30 bezüglich der Ausrichtung und/oder Längserstreckung des Gegenstands 18 im Wesentlichen orthogonal ausgerichtet sein muss, wie dies in Figur 5 dargestellt ist, so dass das von dem Gegenstand 18 reflektiertes Signal eine minimale Stärke aufweist und im Wesentlichen ausschließlich von dem Untersuchungsobjekt reflektierte Signale empfangen werden. Hierzu wird von dem Bediener über einer der Eingabetasten 58 ein für die Erfassung des Untergrundsignals konfigurierter Betriebsmodus ausgewählt. Alternativ hierzu kann die Erfassung des Untergrundsignals manuell von dem Bediener mittels des Bedienelements 40 und der Anzeigeeinheit 42 erfolgen. Mittels des Untergrundsignals kann eine Struktur des Untersuchungsobjekts 16 erfasst werden und dabei insbesondere ein Feuchtegehalt einer Wand bestimmt werden, wobei Bereiche der Wand mit einem hohen Feuchtegehalt sich von Bereichen der Wand mit einem niedrigen Feuchtegehalt in einer dielektrischen Kenngröße unterscheiden. Zudem kann die mittels des Untersuchungssignals erfasste Struktur des Untersuchungsobjekts 16 zu einer Tiefenbestimmung des Gegenstands 18 mittels der Recheneinheit 44 herangezogen werden.

Zudem kann in einem Betriebsmodus des Ortungsgeräts 10 vor einer Ortungsmessung von Gegenständen 18 zuerst automatisch eine Untergrundmessung mittels der Recheneinheit 44 und der Antenneneinheit 24 erfolgen. Sobald sich das Ortungsgerät 10 in seiner Position auf dem Untersuchungsobjekt 16 und/oder bezüglich des Untersuchungsobjekts 16 ändert, wird hierbei automatisch von der Recheneinheit 44 und der Antriebseinheit 46 das Antennenelement 26 gedreht und dabei entlang unterschiedlicher Polarisationsrichtungen 30 ein Messsignal 22 empfangen. Anhand der empfangenen Messsignale 22 wird von der Recheneinheit 44 automatisch das Untergrundsignal ermittelt, so dass ein von einem in dem Untersuchungsobjekt 16 angeordneter Gegenstand 18 reflektiertes Messsignal 22 nahezu störungsfrei in einer anschließenden Ortungsmessung empfangen werden kann. Sofern das gemessene Untergrundsignal für eine Ortungsmessung zu hoch ist und/oder das Untersuchungsobjekt 16 an diesem Messort eine zu inhomogene Struktur aufweist, wie insbesondere wenn die empfangenen Messsignale 22 für die unterschiedlichen Polarisationsrichtungen 30 stark voneinander abweichen, wird dies automatisch von der Recheneinheit 44 über die Anzeigeeinheit 42 an den Bediener ausgegeben. Zudem kann über das Bedienelement 40 und die Anzeigeeinheit 42 der Bediener manuell das Untergrundsignal bestimmen, indem dieser während einer Messung mit variierender Polarisationsrichtung 30 das Signal als Untergrundsignal auswählt, dass eine kleinste Signalstärke aufweist und ein mögliches Objektsignal dabei aufgrund der gewählten Polarisationsrichtung 30 ausgeblendet und/oder unterdrückt ist.

Des Weiteren wird mittels der Recheneinheit 44 eine Darstellung der Polarisationsrichtung 30 des Antennenelements 26 mittels der Anzeigeeinheit 42 automatisch aktualisiert, so dass bei einem Bewegen und/oder Verfahren des Ortungsgeräts 10 über eine Wandoberfläche stets eine aktuelle Information über eine Wandstruktur für den Bediener über die Anzeigeeinheit 42 dargestellt wird. Zudem kann je nach einem von dem Bediener ausgewählten Betriebsmodus eine Ausrichtung und/oder eine Struktur des Untersuchungsobjekts 18 und/oder eine Längserstreckung eines erfassten Gegenstands 18 entlang einer Verfahrrichtung des Ortungsgeräts 10 für den Bediener dargestellt werden, und damit ein Verlauf des Gegenstands 18 erfasst und dargestellt werden.

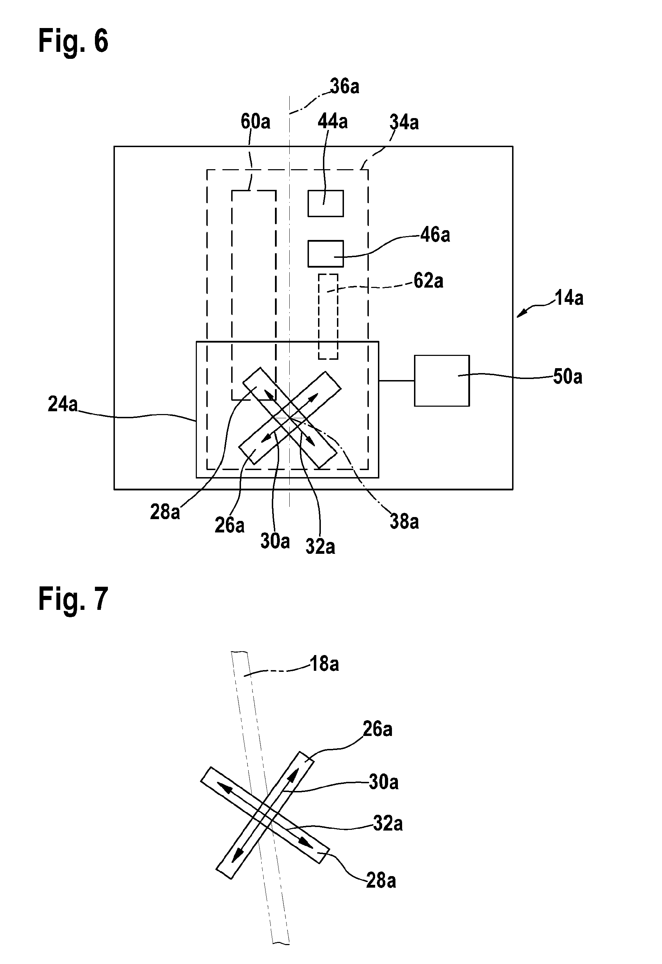

In den Figuren 6 und 7 ist eine alternative Ausgestaltung der Erfindung dargestellt. Im Wesentlichen gleich bleibende Bauteile, Merkmale und Funktionen sind grundsätzlich mit den gleichen Bezugszeichen beziffert. Zur Unterscheidung derAusführungsbeispiele ist den Bezugszeichen des nachfolgenden Ausführungsbeispiels der Buchstabe a hinzugefügt. Die nachfolgende Beschreibung beschränkt sich im Wesentlichen auf die Unterschiede zu dem Ausführungsbeispiel in den Figuren 1 bis 5, wobei bezüglich gleich bleibender Bauteile, Merkmale und Funktionen auf die Beschreibung des Ausführungsbeispiels in den Figuren 1 bis 5 verwiesen werden kann.

Eine Ortungseinheit 14a eines nicht näher dargestellten Ortungsgeräts weist eine Antenneneinheit 24a mit zwei Antennenelementen 26a, 28a auf. Die beiden Antennenelemente 26a, 28a weisen jeweils eine Polarisationsrichtung 30a, 32a auf, die zudem veränderbar bezüglich einer von einer Längsachse gebildeten Achse 36a eines Gehäuses des Ortungsgeräts gelagert sind. Die beiden Polarisationsrichtungen 30a, 32a der beiden Antennenelemente 26a, 28a weisen einen fixen Winkel zueinander auf und sind hierzu starr miteinander verbunden. Eine Einstelleinheit 34a einer Ortungseinheit 14a des Ortungsgeräts ist zu einer zeitgleichen Variation der beiden Polarisationsrichtungen 30a, 32a vorgesehen, wobei die Einstelleinheit 34a und die Ortungseinheit 14a und/oder eine Funktionsweise der Einstelleinheit 34a und der Ortungseinheit 14a analog zu dem Ausführungsbeispiel in den Figuren 1 bis 5 ausgebildet sind. Die beiden Polarisationsrichtungen 30a, 32a sind orthogonal zueinander angeordnet, wobei das erste Antennenelement 26a zu einem Aussenden eines Messsignals entlang der ersten Polarisationsrichtung 30a und das zweite Antennenelement 28a zu einem Empfangen eines Messsignals entlang der zweiten Polarisationsrichtung 32a vorgesehen sind. Für eine Bestimmung einer Ausrichtung und/oder einer Längserstreckung des Gegenstands 18a sind die beiden Polarisationsrichtungen 30a, 32a der beiden Antennenelemente 26a, 28a bezüglich der Ausrichtung und/oder der Längserstreckung eines Gegenstands 18a um ca. 45° geneigt angeordnet, so dass in einem Betrieb das von dem ersten Antennenelement 26a ausgesandte Messsignal entlang der ersten Polarisationsrichtung 30a an dem Gegenstand 18a reflektiert wird und dabei eine Polarisationsrichtung des Messsignals gedreht wird und von dem zweiten Antennenelement 28a entlang der zweiten Polarisationsrichtung 32a empfangen wird. Ferner werden hierbei störende Untergrundsignale bei der Messung unterdrückt, da eine Drehung der Polarisationsrichtung 30a, 32a durch die ein Untergrundsignal erzeugenden Strukturen des Untersuchungsobjekts 16, wie beispielsweise eine Wandoberfläche, eine Dämmmatte usw., verhindert ist. Eine Einstellung einer Position und/oder einer Ausrichtung der Antennenelemente 26a, 28a und/oder der beiden Polarisationsrichtungen 30a, 32a der beiden Antennenelemente 26a, 28a bezüglich des Gehäuses und/oder der von der Längsachse gebildeten Achse 38a erfolgt analog zu der Beschreibung zu den Figuren 1 bis 5.

In einer alternativen Weiterbildung der Erfindung ist es zudem denkbar, dass mittels der Einstelleinheit 34a die beiden Polarisationsrichtungen 30a, 32a der beiden Antennenelemente 26a, 28a zueinander variiert werden können.

## Patentansprüche

1. Ortungsgerät, insbesondere ein handgeführtes Ortungsgerät, mit einem Gehäuse (12; 12a) und einer Ortungseinheit (14; 14a), die zu einer Erfassung einer Materialkenngröße eines Untersuchungsobjekts (16; 16a) mittels eines Messsignals (20, 20a; 22, 22a) vorgesehen ist und die eine Antenneneinheit (24; 24a) aufweist mit zumindest einem Antennenelement (26, 26a; 28, 28a), das eine Polarisationsrichtung (30, 30a; 32, 32a) aufweist und zu einem Aussenden und/oder Empfangen des Messsignals (20, 20a; 22, 22a) entlang der Polarisationsrichtung (30, 30a; 32, 32a) vorgesehen ist, **dadurch gekennzeichnet, dass** die Ortungseinheit (14; 14a) eine Einstelleinheit (34; 34a) aufweist, die zu einer Variation der Polarisationsrichtung (30, 30a; 32, 32a) vorgesehen ist.

2. Ortungsgerät nach Anspruch 1, **dadurch gekennzeichnet, dass** die Antenneneinheit (24a) zumindest ein zweites Antennenelement (26a, 28a) mit einer zweiten Polarisationsrichtung (30a, 32a) aufweist, wobei die Einstelleinheit (34a) zu einer Variation der zweiten Polarisationsrichtung (30a, 32a) vorgesehen ist.

3. Ortungsgerät nach Anspruch 1 und 2, **dadurch gekennzeichnet, dass** die Einstelleinheit (34a) zu einer Variation der beiden Polarisationsrichtungen (30a, 32a) vorgesehen ist.

4. Ortungsgerät zumindest nach Anspruch 1 und 2, **dadurch gekennzeichnet, dass** die beiden Polarisationsrichtungen (30a, 32a) einen fixen Winkel zueinander einschließen.

5. Ortungsgerät nach Anspruch 4, **dadurch gekennzeichnet, dass** die zumindest zwei Polarisationsrichtungen (30a, 32a) der zwei Antennenelemente (26a, 28a) im Wesentlichen orthogonal zueinander angeordnet sind.

6. Ortungsgerät nach einem der vorhergehenden Ansprüche, **dadurch gekennzeichnet, dass** das Antennenelement (26, 26a; 28, 28a) im Gehäuse (12; 12a) um eine Drehachse (38; 38a) drehbar gelagert ist.

7. Ortungsgerät nach einem der vorhergehenden Ansprüche, **dadurch gekennzeichnet, dass** die Einstelleinheit (34; 34a) zumindest ein Bedienelement (40; 40a) aufweist, das zu einer manuellen Einstellung der Polarisationsrichtung (30, 30a; 32, 32a) des Antennenelements (26, 26a; 28, 28a) durch einen Bediener vorgesehen ist.

8. Ortungsgerät nach Anspruch 7, **dadurch gekennzeichnet, dass** die Einstelleinheit (34; 34a) eine Anzeigeeinheit (42; 42a) aufweist, die zu einer Ausgabe einer Stärke des empfangenen Messsignals (22; 22a) während einer manuellen Einstellung der Polarisationsrichtung (30, 30a; 32, 32a) des Antennenelements (26, 26a; 28, 28a) vorgesehen ist.

9. Ortungsgerät nach einem der vorhergehenden Ansprüche, **dadurch gekennzeichnet, dass** die Einstelleinheit (34; 34a) eine Recheneinheit (44; 44a) aufweist, die zu einer automatischen Einstellung der Polarisationsrichtung (30, 30a; 32, 32a) des Antennenelements (26, 26a; 28, 28a) vorgesehen ist.

10. Ortungsgerät nach einem der vorhergehenden Ansprüche, **dadurch gekennzeichnet, dass** die Einstelleinheit (34; 34a) eine Antriebseinheit (46; 46a) aufweist, die zu einer Drehung des Antennenelements (26, 26a; 28, 28a) um eine Drehachse (38; 38a) vorgesehen ist.

11. Ortungsgerät nach Anspruch 9 und 10, **dadurch gekennzeichnet, dass** die Recheneinheit (44; 44a) zu einer automatischen Aktivierung der Antriebseinheit (46; 46a) vorgesehen ist.

12. Ortungsgerät nach einem der vorhergehenden Ansprüche, **dadurch gekennzeichnet, dass** die Einstelleinheit (34; 34a) eine Recheneinheit (44; 44a) aufweist, die mittels einer Änderung der Polarisationsrichtung (30, 30a; 32, 32a) des Antennenelements (26, 26a; 28, 28a) zu einer Bestimmung eines Untergrundsignals vorgesehen ist.

13. Ortungsgerät nach einem der vorhergehenden Ansprüche, **dadurch gekennzeichnet, dass** die Einstelleinheit (34; 34a) eine Recheneinheit (44; 44a) aufweist, die zu einer automatischen Aktualisierung einer Darstellung der Polarisationsrichtung (30, 30a; 32, 32a) des Antennenelements (26, 26a; 28, 28a) mittels einer Anzeigeeinheit (42; 42a) vorgesehen ist.

14. Ortungsverfahren, insbesondere mit einem Ortungsgerät (10; 10a) nach einem der vorhergehenden Ansprüche, zu einer Erfassung einer Materialkenngröße eines Untersuchungsobjekts (16; 16a) mittels eines Messsignals (20, 20a; 22, 22a), **dadurch gekennzeichnet, dass** eine Polarisationsrichtung (30, 30a; 32, 32a) eines Antennenelements (26, 26a; 28. 28a) bezüglich einer Achse (36; 36a) eines Gehäuses (12; 12a) des Ortungsgeräts (10; 10a) geändert wird.
